# EUROPEAN PATENT APPLICATION

(11) **EP 2 816 274 A1**
(43) Date of publication of application: **24.12.2014**
(21) Application number: 13460037.8
(22) Date of filing: 17.06.2013
(51) Int. Cl.: F16L 59/10

(54) **Preinsulated pipe jacket and a method for manufacturing the preinsulated pipe jacket**

(71) Applicant: Radpol S.A., 77-300 Czluchow (PL)
(72) Inventor: Pozarowszczyk, Jerzy, 20-786 Lublin (PL); Pozarowszczyk, Andrzej, 20-723 Lublin (PL)
(74) Representative: Dennemeyer & Associates S.A.

(57) **Abstract**

A preinsulated pipe jacket consists of at least three layers, wherein a first outer layer (1) is high-density polyethylene (HDPE), a third layer is a barrier layer (3) impermeable to an agent foaming an insulating layer of a preinsulated pipe. Between the first outer layer (1) and the third barrier layer (3) there is a second adhesive layer (2). The jacket contains further two layers in the form an adhesive layer (4) and an inner layer (5) of HDPE. A method for manufacturing the preinsulated pipe jacket involves the extrusion of the outer layer (1) material and the simultaneous extrusion of the other, at least two layers (2,3) of the jacket. The first outer layer (1) of HDPE is extruded and simultaneously inside this first layer (1) the second adhesive layer (2) and the third barrier layer (3) are extruded. Simultaneously the fourth adhesive layer (4) and the fifth layer (5) of HDPE are coextruded.

## Description

The present invention relates to a preinsulated pipe jacket made of plastic. The jacket according to the invention is used in heat engineering, especially in the manufacture of preinsulated pipes for the construction of district heating pipelines, but also in the gas industry, water supply systems, sewerage systems, the mining and chemical industries and geothermal heating plants. This invention also relates to a method for manufacturing the preinsulated pipe jacket for the uses specified above.

There are known design solutions of plastic pipes intended for use in heat engineering. In a basic solution the known pipe comprises a jacket put on a steel heating pipe, and the space between the jacket and the inner steel pipe surface is filled with hard polyurethane foam where a foaming gas for its production is usually cyclopentane. This kind of product is known as a preinsulated pipe and is used in district heating for conveying a heating medium.

According to the solution known from Polish patent specification No. PL 203327, a preinsulated pipe is made of an inner medium conveying pipe, coaxially enclosed by homogeneous insulating layers of constant thickness, first of mineral wool in the form of compressed coats and then of polyurethane foam, where the layers are separated by a protective jacket in the form of a spiral wound pipe, and the whole is enclosed by a pipe jacket.

In known solutions a pipe which is a jacket is usually made of one layer of pure high-density polyethylene (HDPE). There are also many known solutions of multi-layer pipes of different uses, particularly in the gas industry and the conveyance of petroleum products.

In the solution known from international application specification WO 2007/096589 disclosed is a multi-layer flexible pipe for the conveyance of fluids. The multi-layer pipe according to this known invention includes a core layer conveying a fluid and at least one barrier layer. On an inner layer there is a barrier layer as a subsequent layer and further layers reinforcing the pipe in axial and radial directions. The barrier layer is made of a thermoplastic polymeric material, for example, one of many varieties of copolymeric or elastomeric polymeric materials.

In another solution known from international application specification No. WO 99/67651, disclosed is a pipe for conveying liquid materials such as petroleum products or gas products. According to this known solution the pipe comprises a plurality of layers in the form of an inner layer made of a thermoplastic material, an intermediate reinforcing layer, a polymer layer and a thermoplastic outer layer. According to this known solution the pipe is manufactured by heat sealing or bonding individual layers.

Another known solution of a multi-layer pipe is disclosed in international patent specification No. WO 2005/028198. According to this solution an outer pipe contains inner layers in the form of a barrier layer against an outflow of a fluid and one or more reinforcing layers. The barrier layer according to this known solution comprises a metal film layer, such as aluminium foil or film of a different type of metal.

In another solution known from European patent specification No. EP 1867910 disclosed is a conduit pipe with thermal insulation. According to this known solution the conduit pipe comprises at least one inner medium-conveying pipe surrounded by a heat insulating layer and a corrugated outer jacket pipe. A heat insulating material comprises partially open-cell polyurethane foam. This known solution provides that the pipe comprises an inner layer of film surrounding the heat insulating layer. However, between said heat insulating layer and said film layer there is an intermediate layer. The intermediate layer comprises a flexible forming foam layer on hard polyurethane foam. Said film that is impermeable to water, vapour or resistant to steeping is adhered to the flexible foam. The film comprises aluminium foil which at least on one side contains a copolymer layer. The film may also comprise metallised plastic film. According to this known solution the barrier layer is arranged between the heat insulating layer and an outer jacket.

In another solution known from European patent specification EP 1471299 a different solution of a thermally insulated pipe is disclosed. According to this known solution the thermally insulated pipe contains at least one inner tube and a thermal insulation layer based on polyurethane foam arranged on it. The pipe contains an outer mantle made of plastic. According to this known solution, between the outer mantle and the thermal insulation layer there is plastic film which is in contact both with the outer mantle and the thermal insulation layer surface. According to this known solution, said plastic film has several layers, with at least one layer that is impermeable to the blowing agent gas in the polyurethane foam cells, which is usually cyclopentane. This impermeable barrier layer comprises a layer of polyethylene, polyamide or a mixture of ethylene vinyl acetate (EVA). In the embodiment of the invention, said film has five layers. Also in this solution said film is arranged between the mantle and the thermal insulation layer, so it is an independent component of a complete preinsulated pipe.

In the patent specification of a different solution known from European application No. EP 1355103 another solution of a preinsulated pipe is disclosed. According to this known solution, a preinsulated pipe comprises a heating medium conveying pipe, an insulating material surrounding at least part of the length of the medium conveying pipe and a jacket pipe at least partly surrounding the insulating material. The preinsulated pipe according to this solution comprises a layer of polymeric material at least partly surrounding the insulating material. The layer of polymeric material comprises at least one layer of a material or combination of materials being permeable to water or water vapour, and having significantly better properties than polyethylene for resistance against diffusion of oxygen and carbon dioxide, where said material or combination of materials includes at least one of the materials such as PVDC, PA or EVOH. By the invention it is obtained that any water vapour is allowed to escape from the insulating material, while keeping carbon dioxide within the insulating material.

According to this known solution, the layer of the polymer material is arranged between the insulating material and the jacket pipe.

This known solution also discloses a method for manufacturing a preinsulated pipe, where the preinsulated pipe comprises a heating medium conveying pipe, an insulating material surrounding it and a jacket pipe surrounding the insulating material. The insulating material comprises a layer, and the jacket pipe is made in a process involving extrusion. The layer of the insulating material is placed inside the extruded jacket pipe in an operation including continuous folding, where said layer of the insulating material is joined by heating the glue on the edges inside the extruded jacket pipe and around the central heating medium conveying pipe. The object of this invention is a preinsulated pipe and a method for manufacturing the preinsulated pipe comprising a barrier layer between a jacket pipe and a thermal insulation layer.

In another solution known from European patent specification No. EP 1867910 disclosed is a conduit pipe with thermal insulation. According to this known solution the conduit pipe comprises at least one inner medium-conveying pipe surrounded by a heat insulating layer and a corrugated outer jacket pipe. A heat insulating material comprises partially open-cell polyurethane foam. This solution provides that the pipe comprises an inner layer of film surrounding the heat insulating layer. However, between said heat insulating layer and said film layer there is an intermediate layer. The intermediate layer comprises a flexible forming foam layer to which said film is adhered that is impermeable to water, vapour or resistant to steeping. The film may comprise aluminium foil which at least on one side contains a copolymer layer. The film may also comprise metallised plastic film. According to this known solution the barrier layer is arranged between the heat insulating layer and an outer jacket.

A method for manufacturing a conduit pipe according to this known solution involves a continuous extrusion of a barrier layer together with an extrusion of an insulating material.

A known method for manufacturing preinsulated pipes involves the putting of a high-density polyethylene (HDPE) jacket on a steel pipe and the filling of the space between the pipe and the jacket with insulating polyurethane foam. In this case, where a polyethylene pipe without an anti-diffusion barrier is used as a jacket, polyurethane foam which is a fill of the space between the pipe and the jacket is degraded more quickly. Over the years of operation of a hot water pipeline the insulating properties of such a preinsulated pipe significantly deteriorate. This phenomenon is a result of the diffusion of molecules of cyclopentane which usually is a gas that fills polyethylene foam cells through the material of a preinsulated pipe outer jacket. In turn, oxygen permeation into the interior of a jacket pipe leads to the weakening of the oxidising polyurethane foam structure, thereby reducing its adhesion to an inner pipe and consequently the mechanical integrity of the system deteriorates. Because in place of cell gases, namely cyclopentane and CO₂ of the polyurethane insulating foam, from the air oxygen and nitrogen permeate that have a higher thermal conductivity compared to cell gases, the thermal insulation of preinsulated pipes decreases, which as a result leads to an increase in heat losses in the transmission network. A known barrier layer for reducing this phenomenon, used in the construction of preinsulated pipes is metal foil, usually aluminium foil, sufficiently limiting the phenomenon of diffusion of cyclopentane through a preinsulated pipe jacket. However, this foil is a separate component of a preinsulated pipe not connected or only adhered to a jacket or to the surface of thermal insulation foam.

The manufacturing technology of preinsulated pipes with an anti-diffusion layer made of aluminium foil is referred to as continuous technology, so-called conti. It involves a simultaneous application of PUR foam on a steel line pipe, an application of aluminium foil forming an anti-diffusion layer and an extrusion of a jacket in the form of a pipe made of high-density polyethylene (HDPE). This technology is expensive, complex and, in the current state of the art, limited to the manufacture of pipes with smaller diameters.

Continuous technology in the current state of the art is limited to the manufacture of straight sections of preinsulated pipes with a diameter of ca. 300 mm. However, nowadays all fittings such as elbows, tees, drainage, vents and couplers in preinsulated networks are manufactured with an outside jacket without an anti-diffusion barrier.

The objective of the invention is the development of a design solution involving the arrangement in a preinsulated pipe of a barrier layer preventing the diffusion of a foaming gas from a thermal insulation layer, to enable the manufacture from this material of such fittings as elbows, tees and couplers connecting the individual straight sections of preinsulated pipes, especially of a district heating pipeline, without losing barrier properties with regard to an agent foaming thermal insulation foam.

The object of the invention is presented in claim 1 and claim 8, as well as in other dependent patent claims.

According to the invention, a preinsulated pipe jacket is made of plastic and is composed of at least three layers. A first outer layer comprises a layer of high-density polyethylene (HDPE).

The jacket contains a third barrier layer, where between the first outer layer and the third barrier layer there is a second adhesive layer. The third barrier layer is a layer impermeable to an agent foaming an insulating layer.

In a preferred embodiment a barrier layer comprises a layer of ethylene vinyl alcohol (EVOH) copolymer resin. This layer may also be a layer of polyamide (PA) or a layer of polyvinylidene chloride (PVDC).

The jacket according to the invention may comprise further layers; in particular, it may comprise a fourth inner layer and a fifth inner layer. The fifth inner layer may comprise high-density polyethylene (HDPE), while the fourth layer which is between the third barrier layer and the fifth inner layer may be an adhesive layer.

According to the invention, it is provided that both adhesive layers, namely a second adhesive layer and a fourth adhesive layer may comprise a layer of maleic anhydride grafted modified linear low density polyethylene (LLDPE). The term an adhesive layer in this patent specification means a layer of material which provides a permanent connection of a layer of high-density polyethylene with a barrier layer.

In a preferred embodiment of the invention the thickness of each adhesive layer, namely the second adhesive layer and the fourth adhesive layer is from 1% to 15% of the total jacket wall thickness.

The preferred thickness of the third barrier layer may be from 1% to 15% of the total jacket wall thickness.

In the solution according to the invention, the first outer layer and the fifth inner layer made of high-density polyethylene (HDPE) together comprise from 70% to 99% of the total jacket wall thickness, according to the invention.

According to the invention, a method for manufacturing a preinsulated pipe jacket involves the extrusion of the outer layer material and the simultaneous extrusion of the other, at least two layers of the jacket. The extrusion is carried out from extruders in a coextrusion process.

The method for manufacturing is **characterised in that** the first outer layer of high-density polyethylene (HDPE) is coextruded and simultaneously from the inside of the first outer layer the second layer is extruded which comprises an adhesive layer. In the same operation of coextrusion together with the first outer layer and under the second adhesive layer the third barrier layer is extruded in the form of material impermeable to an agent foaming an insulating layer of a preinsulated pipe. The insulating layer usually comprises a layer of polyurethane foam.

The third barrier layer in a preferred embodiment of the invention comprises a layer of ethylene vinyl alcohol (EVOH) copolymer resin. Said third barrier layer here is an inner layer of the jacket.

In a preferred embodiment of the invention, the fourth adhesive layer is extruded under the third barrier layer and the fifth inner layer under the fourth adhesive layer. Mentioned fifth inner layer in a ready preinsulated pipe is in contact with the surface of a thermal insulation foam layer.

According to the invention it is provided that a layer of maleic anhydride grafted modified linear low density polyethylene (LLDPE) is extruded as the second adhesive layer and the fourth adhesive layer.

After extrusion the jacket is preferably calibrated in an aquatic environment at a temperature of up to 35°C.

The preinsulated pipe jacket which is the object of the invention enables the making of straight sections of preinsulated pipes with an anti-diffusion barrier by arranging a steel line pipe centrically inside the jacket according to the invention. Then, insulation polyurethane foam is injected into the space between the pipe and the jacket. The making of a barrier layer as one of the jacket wall layers also enables the making of necessary preinsulated fittings using the jacket according to the invention in the process of prefabrication. The jacket according to the invention may be used by cutting appropriate segments for the making of jackets for preinsulated fittings such as elbows, tees and other fittings used in district heating pipelines, maintaining a barrier layer in the jacket walls. This was not possible in the case of preinsulated pipes with a barrier layer known in the prior art due to the fact that in the known preinsulated pipes a barrier layer is an intermediate layer between a layer of insulating foam and an outer jacket of a complete preinsulated pipe and is not a component of an outer jacket. The use of aluminium foil or plastic film as a barrier layer in solutions of preinsulated pipes known in the state of the art prevented the prefabrication of preinsulated fittings with a barrier layer. Using this type of a ready preinsulated pipe with insulation and an inner heating medium-conveying steel pipe it is not possible to make the fittings in question. The solutions known in the state of the art provided an effective barrier layer for the diffusion of a foaming gas from polyurethane foam, in particular in straight sections of a preinsulated pipe.

The essence of the solution according to the invention is to move a barrier layer to a different place. According to the invention, the barrier layer has been moved to an outer jacket which is a structural member of a preinsulated pipe. This barrier layer has been introduced as a new structural member to the layered structure of the jacket. This has enabled the prefabrication of fittings in the plant, such as elbows, tees and other fittings for a hot water pipeline from appropriately cut elements from such a jacket, without damage to the barrier layer contained in the jacket. The elements cut from the jacket according to the invention are fixed on a steel fitting, for example, a tee, elbow or other fitting. The elements of the jacket according to the invention put previously in such a way are heat sealed together, and then the interior between a steel pipe and a jacket is filled with insulation polyethylene foam. This solution of the jacket according to the invention has enabled the making of such fittings as elbows, tees, etc. in a prefabrication process in the plant while maintaining a barrier layer in the fittings, which was not possible in the prior art solutions.

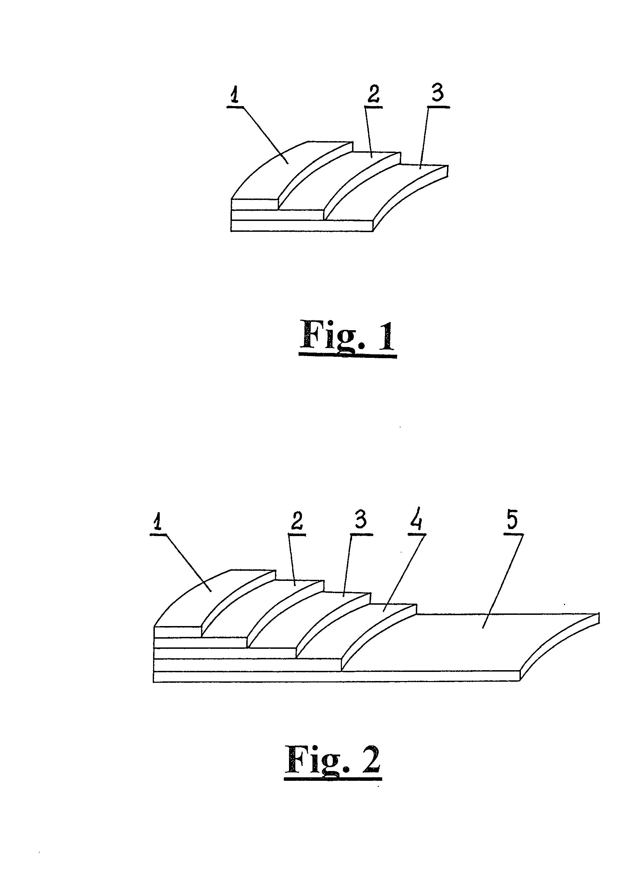

The object of the invention is shown schematically in the following examples in Fig. 1 showing a three-layer jacket and Fig. 2 showing a five-layer jacket.

### Example I.

Fig. 1 shows an arrangement of layers of the preinsulated pipe jacket in the example, where the jacket consists of three layers. In this example, the preinsulated pipe jacket is made of plastic and is composed of layers 1, 2, 3. A first outer layer 1 is a 4 mm thick layer of high-density polyethylene (HDPE).

The jacket is a pipe section shown in Fig. 1 and an exemplary diameter of 315 mm. With this diameter the three-layer jacket wall is 4,4 mm thick in total. The jacket in this example contains a 0,25 mm thick third barrier layer 3, where between the first outer layer 1 and the third barrier layer 3 there is a second adhesive layer 2. The third barrier layer 3 comprises a layer of ethylene vinyl alcohol (EVOH) copolymer resin which is a layer impermeable to gas, especially to foaming gas contained in polyurethane foam constituting an insulating layer of a preinsulated pipe. In other embodiments of the solution according to the invention a barrier layer may be a layer of polyamide (PA) or polyvinylidene chloride (PVDC).

In a layer of insulating foam not shown in the figures a heating medium-conveying steel pipe is usually laid in the preinsulated pipe which is also not shown in the figure because the design of the preinsulated pipe is well known to skilled persons. On a layer of insulating foam there is the jacket according to the invention. The whole is the preinsulated pipe.

The jacket, according to the invention, contains the third barrier layer 3 impermeable to a foaming agent, which is usually cyclopentane, from polyurethane foam. The jacket according to the invention provides an effective protection against the permeation of this gas outside the preinsulated pipe, so against the loss of insulating properties by the preinsulated pipe. In this example, an adhesive layer is a 0,15 mm thick layer of maleic anhydride grafted modified linear low density polyethylene (LLDPE). In this example, the pipe jacket wall according to the invention is 4,4 mm thick in total.

### Example II.

Fig. 2 shows an arrangement of layers of the preinsulated pipe jacket in the example, where the jacket consists of five layers. In this example, the preinsulated pipe jacket is made of plastic and is composed of layers 1,2,3,4,5. A first outer layer 1 is a 0,9 mm thick layer of high-density polyethylene (HDPE).

The jacket is a pipe section of a design shown in Fig. 2 and an exemplary diameter of 315 mm. With this diameter the jacket wall is 4,45 mm thick in total. The jacket in this example contains a 0.25 mm thick third barrier layer 3, where between the first outer layer 1 and the third barrier layer 3 there is a second 0,15 mm thick adhesive layer 2. The third barrier layer 3 comprises a layer of 0,25 mm thick ethylene vinyl alcohol (EVOH) copolymer resin which is a layer impermeable to gas, especially to foaming gas contained in polyurethane foam constituting an insulating layer of a preinsulated pipe. In other embodiments of the solution according to the invention a barrier layer may be a layer of polyamide (PA) or polyvinylidene chloride (PVDC).

In the example shown in Fig. 2 the jacket contains further two layers inside in the form of a fourth layer 4 and a fifth inner layer 5. In this example, the jacket thus contains five layers. The arrangement of these layers is schematically shown in Fig. 2. The following data relating to the thicknesses of individual layers is illustrated with an example of a five-layer jacket with an outer diameter of 315 mm.

The fifth inner layer 5 is a 3.0 mm thick layer of high-density polyethylene (HDPE), and the fourth layer 4 which is between the third barrier layer 3 and the fifth inner layer 5 is a 0,15 mm thick adhesive layer.

According to the invention it is provided that both adhesive layers, namely the second adhesive layer 2 and the fourth adhesive layer 4 are the layers of maleic anhydride grafted modified linear low density polyethylene (LLDPE). As stated during tests, this adhesive material provides sufficient adhesion to high-density polyethylene (HDPE) and to the barrier layer EVOH.

In a preferred example of the solution according to the invention the thickness of each adhesive layer, namely the second adhesive layer 2 and the fourth adhesive layer 4 comprises 3,4% of the total thickness of the jacket wall.

In this example, the first outer layer 1 and the fifth inner layer 5 made of high-density polyethylene (HDPE) in total comprise 87,6% of the total thickness of the jacket wall, according to the invention.

### Example III.

A method for manufacturing the preinsulated pipe jacket involves the extrusion of the outer layer material in the form of high-density polyethylene (HDPE) with a temperature of 205°C and the simultaneous extrusion of the other two layers of the jacket. The extrusion is carried out from extruders in a coextrusion process. A first outer layer 1 of high-density polyethylene (HDPE) is coextruded and simultaneously inside the first outer layer 1 a second layer 2 is extruded which comprises an adhesive layer. In the same operation of coextrusion together with the first outer layer 1 and with the second adhesive layer 2 a third barrier layer 3 is extruded in the form of ethylene vinyl alcohol (EVOH) copolymer resin at a temperature of 215°C. The third barrier layer 3, in this embodiment, is an inner layer of the multi-layer jacket.

### Example IV.

In another example, in the technology described in embodiment III a fourth adhesive layer 4 is extruded under the third barrier layer 3 and a fifth inner layer 5 under said fourth adhesive layer 4. In this example of the solution according to the invention, layers of maleic anhydride grafted modified linear low density polyethylene (LLDPE) at a temperature of 210°C are extruded as the second adhesive layer 2 and the fourth adhesive layer 4. The adhesive layers 2, 4 are coextruded between the other three layers in the form of the first outer layer 1, the third barrier layer 3 and the fifth inner layer 5. All the five layers 1, 2, 3, 4, 5 are fed to the pipe head from separate extruders, wherein the adhesive layers 2, 4 can be fed to the head from one extruder. The process of coextrusion of plastic from separate extruders through one extrusion head to obtain a layered product is sufficiently well known to persons skilled in the art and does not require a more detailed explanation.

After extrusion the jacket is preferably calibrated by gradual cooling in an aquatic environment to a temperature of up to 35°C.

After manufacture, the jacket is a product ready for use as an outer jacket pipe in the process of manufacture of complete preinsulated pipes used in the construction of underground district heating. As stressed in this patent specification above, the jacket is also suitable for use as an outer cover of elbows, tees and other components, made in a prefabrication process, connecting preinsulated pipe sections. Appropriately cut and heat sealed sections of the jacket centrically arranged around a steel fitting and containing in its design a barrier layer enable the filling of the space between the jacket and a steel heating medium-conveying pipe with insulating polyurethane foam.

The jacket in both of these uses, namely for the manufacture of straight sections of a preinsulated pipe and for prefabrication in the plant as a cover for elbows, tees and other preinsulated fittings in pipelines, in particular, district heating pipelines maintains barrier properties with regard to cyclopentane which is foaming gas in the creation of polyurethane foam. The maintenance of barrier properties in both of these cases is a result of an arrangement of a barrier layer in the structure of the preinsulated pipe jacket, as proposed according to the solution of the invention.

## Claims

1. A preinsulated pipe jacket made of plastic, wherein the jacket is composed of at least three layers, where a first outer layer is high-density polyethylene (HDPE), **characterised in that** a third layer is a barrier layer (3) impermeable to an agent foaming an insulating layer of a preinsulated pipe, where a second adhesive layer (2) is between the first outer layer (1) and the third barrier layer (3).

2. The jacket according to claim 1, **characterised in that** the third barrier layer (3) is a layer of ethylene vinyl alcohol (EVOH) copolymer resin.

3. The jacket according to claim 1 or 2, **characterised in that** it contains a fourth layer (4) and a fifth inner layer (5), where the fifth inner layer (5) is high-density polyethylene (HDPE), and the fourth layer (4) which is between the third barrier layer (3) and the fifth inner layer (5) is an adhesive layer.

4. The jacket according to claim 3, **characterised in that** the second adhesive layer (2) and the fourth adhesive layer (4) is a layer of maleic anhydride grafted modified linear low density polyethylene (LLDPE).

5. The jacket according to one of claims 3 or 4, **characterised in that** the thickness of the adhesive layer (2,4) comprises from 1% to 15% of the total thickness of the jacket wall.

6. The jacket according to claim 3, **characterised in that** the thickness of the third barrier layer (3) comprises from 1% to 15% of the total thickness of the jacket wall.

7. The jacket according to claim 3, **characterised in that** the first outer layer (1) and the fifth inner layer (5) comprise from 70% to 99% of the total thickness of the jacket wall.

8. A method for manufacturing the preinsulated pipe jacket involving the extrusion of the outer layer material and the simultaneous extrusion of the other at least two layers of the jacket from extruders in a coextrusion process, **characterised in that** the first outer layer (1) of high-density polyethylene (HDPE) is coextruded and simultaneously inside the first layer (1) the second adhesive layer (2) together with the third barrier layer (3) impermeable to an agent foaming an insulating layer of a preinsulated pipe are extruded.

9. The method according to claim 8, **characterised in that** ethylene vinyl alcohol (EVOH) copolymer resin is extruded as the third barrier layer (3).

10. The method for manufacturing according to claim 8 or 9, **characterised in that** from extruders the fourth adhesive layer (4) is extruded under the third barrier layer (3) and the fifth inner layer (5) is extruded under the fourth adhesive layer (4).

11. The method for manufacturing according to claim 8 or 10, **characterised in that** a layer of maleic anhydride grafted modified linear low density polyethylene (LLDPE) is extruded as the second adhesive layer (2) and as the fourth adhesive layer (4).

12. The method for manufacturing according to one of claims from 8 to 11, **characterised in that** after extrusion the jacket is calibrated in an aquatic environment at a temperature of up to 35°C
